# EUROPEAN PATENT SPECIFICATION

(11) **EP 0 528 029 B1**
(45) Date of publication and mention of the grant of the patent: **28.08.1996**
(21) Application number: 91903582.4
(22) Date of filing: 08.02.1991
(51) Int. Cl.: F16J 15/34

(54) **MECHANICAL SEAL**
GLEITRINGDICHTUNG
JOINT D'ETANCHEITE A ACTION MECANIQUE

(43) Date of publication of application: 24.02.1993
(73) Proprietor: NIPPON PILLAR PACKING CO., LTD., Osaka-shi, Osaka 532 (JP)
(72) Inventor: OHBA, Kanji, Kobe-shi Hyogo 651-13 (JP); NAKAJIMA, Takeo, Sanda-shi Hyogo 669-15 (JP); TAMURA, Yuichi, Kobe-shi Hyogo 653 (JP)
(74) Representative: Fleuchaus, Leo, Dipl.-Ing.
(86) International application number: JP9100158
(87) International publication number: WO9214080

(56) References cited:
- DE-A- 1 901 676
- JP-A-57 157 864
- JP-B- 4 019 885
- JP-B- 6 256 391
- JP-U- 603 365
- JP-Y- 128 379

## Description

The present invention relates to a mechanical seal used at a shaft seal part in a rotary apparatus and more particularly to a seal according to the preamble of claim 1.

Such a seal is for example known from EP-A-386 315 and may for example be used as a shaft seal in a rotary apparatus in a chemical industry which handles a highly corrosive liquid liable to be readily solidified, particularly a rubber-nature fluid such as latex or the like to be solidified by shear friction, a plastic fluid to be copolymerized and solidified by sliding frictional heat, a petroleum fluid such as highly viscous heavy oil or the like, a black liquid in a pulp industry, muddy water containing a great amount of slurry, or the like.

Furthermore, another seal is known from JP-A-57-157864. However, the seal disclosed in said document serves a different purpose than the seal disclosed in EP-A-386 315, namely the purpose of improving the lubrication properties of the areas between sliding faces.

### Background Art

There are known the following mechanical seals as examples of a shaft seal in a pump for delivering a rubber-nature fluid such as latex or the like.

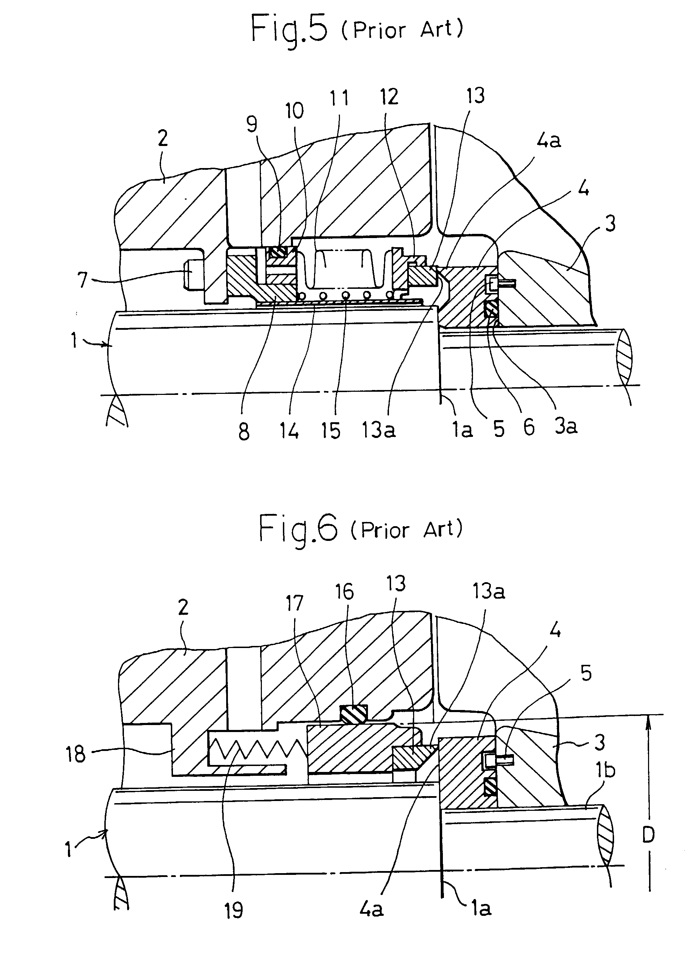

A mechanical seal shown in Fig. 5 is disposed between the outer peripheral surface of a rotary shaft 1 which is a rotary side, and the inner peripheral surface of a casing 2 which is a stationary side. An impeller 3 is fitted on the peripheral surface of that part of the rotary shaft 1 at the pump chamber side. A rotary seal ring 4 is disposed between a shaft-seal-side end surface 3a of the impeller 3 and a stepped portion la of the rotary shaft 1 which is opposite to the shaft-seal-side end surface 3a. The rotary seal ring 4 is engaged with a knock pin 5 projecting from the end surface 3a of the impeller 3, and is secured to the outer peripheral surface of the rotary shaft 1 with the gap between the end surface 3a and the stepped portion la sealed through an O-ring 6. Thus, the rotary seal ring 4 is rotated integrally with the rotary shaft 1.

A retainer 8 is attached to the inner peripheral surface of the casing 2 through a bolt 7. An adapter ring 10 is attached to the retainer 8. The gap between the adapter ring 10 and the inner peripheral surface of the casing 2 is sealed by an O-ring 9. Through a bellows 11 formed from metal, a seal ring retainer 12 is supported by the adapter ring 10. A stationary seal ring 13 having a flat sealing end surface 13a is secured to the seal ring retainer 12. The rotary seal ring 4 has a sharp blade-like sealing end portion 4a, which slides on the sealing end surface 13a.

Secured to the retainer 8 is a buffle ring 14 of which tip reaches in the vicinity of the inner end of the stationary seal ring 13. At the outer periphery of the buffle ring 14, a mono-coil spring 15 is interposed between the retainer 8 and the seal ring retainer 12, to bias and move the stationary seal ring 13 toward the rotary seal ring 4. Thus, the flat sealing end surface 13a is resiliently pressed to the sealing end portion 4a of the rotary seal ring 4.

A mechanical seal shown in Fig. 6 is of the type where no bellows is used. Likewise in the mechanical seal in Fig. 5, the rotary seal ring 4 is secured to the outer periphery of the rotary shaft 1. On the other hand, the stationary seal ring 13 is secured to the tip of a seal ring retainer 17 disposed at the inner peripheral surface of the casing 2 through an O-ring 16. The stationary seal ring 13 is moved toward the rotary seal ring 4 by the spring loads of a plurality of circumferentially disposed multi-coil springs 19 which are held by a spring retainer 18 formed integrally with the casing 2. The blade-like sealing end portion 13a formed at the stationary seal ring 13 is resiliently pressed to the flat sealing end surface 4a of the rotary seal ring 4.

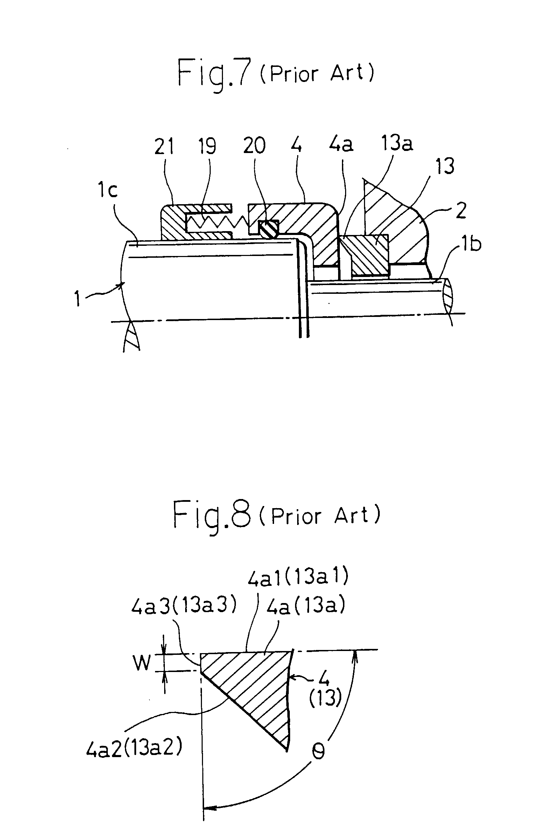

A mechanical seal shown in Fig. 7 is of the type that no bellows is used likewise in the mechanical seal shown in Fig. 6. The rotary shaft 1 has a small-diameter part 1b at the air side and a large-diameter part lc at the side of a fluid to be sealed. The rotary seal ring 4 is fitted, in a liquid-tight manner, on the outer periphery of the large-diameter part lc through an O-ring 20. On the other hand, the stationary seal ring 13 is rotatably fitted on the small-diameter part 1b of the rotary shaft 1 and secured to the inner peripheral surface of the casing 2. The rotary seal ring 4 is moved toward the stationary seal ring 13 by the spring loads of a plurality of circumferentially disposed multi-coil springs 19 which are held by a spring retainer 21 secured to the outer periphery of the large-diameter part lc of the rotary shaft 1. The flat sealing end surface 4a of the rotary seal ring 4 is resiliently pressed to the blade-like sealing end portion 13a of the stationary seal ring 13.

In any of the conventional mechanical seals shown in Figs. 5 to 7, the blade-like sealing end portion 4a or 13a is asymmetrical in configuration in that, as shown in Fig. 8, the outer peripheral surface 4al or 13al of the blade-like sealing end portion 4a or 13a is parallel with the axis of the rotary shaft 1 while the inner peripheral surface 4a2 or 13a2 of the blade-like sealing end portion 4a or 13a is inclined with respect to the axis of the rotary shaft 1. Also as shown in Fig. 8, the angle θ formed by the outer peripheral surface 4al or 13al with respect to the edge surface 4a3 or 13a3 is set to 90° or less.

In any of the conventional mechanical seals above-mentioned, the inner and outer peripheral surfaces of the blade-like sealing end portion 4a or 13a are asymmetrical with respect to the edge surface. This requires a highly advanced machining technique, so that the production cost is expensive. Further, the angle formed by the outer peripheral surface 4al or 13al with respect to the edge surface 4a3 or 13a3 is not greater than 90°. Accordingly, at the time of machining or when the edge surface 4a3 or 13a3 is resiliently pressed to the flat sealing end surface 13a or 4a and the edge surface 4a3 or 13a3 and the sealing end surface 13a or 4a slide on and come in contact with each other while being rotated, the corner part of the edge surface 4a3 or 13a3 is liable to be broken. This makes it difficult to produce a predetermined sealing effect in a stable manner.

In the conventional mechanical seal shown in Fig. 5, the mono-coil spring 15 is combined with the bellows 11 formed from metal. Accordingly, the structure is not only complicated, but also expensive. Further, the mechanical seal becomes lengthened. Moreover, due to the limited spring load of the metal-formed bellows 11, such a mechanical seal is not suitable for use under the condition of great change in resilient pressure.

In any of the conventional mechanical seals shown in Figs. 6 and 7, no metal-formed bellows is used. Accordingly, such a mechanical seal is simpler in structure than the mechanical seal in Fig. 5. In the mechanical seal in Fig. 6, however, when the O-ring 16 gets clogged with a solidified body, the retainer 17 cannot be smoothly moved. Further, the balance diameter D becomes great as compared with the edge surface diameter. Accordingly, at the time when the pressure varies, particularly when a reverse pressure is generated, a great opening force acts on the sealing end portion 13a and the sealing end surface 4a. Therefore, the sealing performance is lowered or lost, thus involving the likelihood that the fluid leaks. Accordingly, the application of such a mechanical seal is limited. In the mechanical seal shown in Fig. 7, the multi-coil springs 19 are liable to get clogged with dust, dirt, a solidified body or the like, thus preventing the mechanical seal from properly operating. Further, the O-ring 20 is liable to be sticked.

### Disclosure of the Invention

In view of the foregoing, the present invention is proposed with the object of providing the following mechanical seal having a rotary seal ring and a stationary seal ring which slide on and come in contact with each other for sealing a fluid. A blade-like sealing end portion formed at one seal ring is resiliently pressed, through spring means, to a flat sealing end surface formed at the other seal ring. The blade-like sealing end portion is symmetrical in configuration at the inner and outer peripheral surfaces thereof with respect to the edge surface thereof. This facilitates the machining of the blade-like sealing end portion , thus lowering the production cost. Further, the angles formed by the inner and outer peripheral surfaces of the blade-like sealing end portion with respect to the edge surface thereof are set to an angle not less than 90°. This prevents the sealing end portion from being broken at the time of production and operation, thus assuring a stable sealing performance for a long period of time.

According to the mechanical seal of the present invention as defined in claim 1, the blade-like sealing end portion formed at one of the rotary and stationary seal rings is symmetrical at the inner and outer peripheral surfaces thereof with respect to the edge surface thereof, and the angles formed by the inner and outer peripheral surfaces thereof with respect to the edge surface thereof are set in the range from 105° to 150°. Accordingly, the inner and outer peripheral surfaces of the sealing end portion can be readily machined with high precision with common machining means. This lowers the production cost. Further, the sealing end portion has no corner of which angle is less than 90°. This prevents the sealing end portion from being broken at the time of production and operation. This assures such an excellent sealing performance as to be required for a mechanical seal of this type, in a stable manner for a long period of time. Since the sealing end portion is made in the form which is hardly broken, there can be used, as the material of the sealing end portion, not only hard metal mainly composed of WC, but also relatively fragile carbon and ceramics. Thus, the material cost can also be lowered.

As the spring means, a mono-coil spring is used as disposed outside of a fluid space, and a packing serving as a secondary seal is covered with and protected by an axially stretchable V-shape seal. This prevents the spring and the secondary seal from getting clogged with a solidified body or the like, yet maintaining the spring properties. Accordingly, the mechanical seal of the present invention can be improved in operational effect and can assure an excellent sealing performance in a stable manner for a long period of time.

As the spring means, a flat leaf spring is used as disposed inside or outside of the fluid space. Accordingly, the mechanical seal can be simplified and shortened in structure and lowered in cost. Further, since the balance diameter can be minimized with respect to the diameter of the edge surface, a high surface pressure can be maintained. Thus, in combination with such structure as to minimize the possibility of the spring means and the packing getting clogged with a solidified body or the like, the mechanical seal of the present invention assures an excellent sealing performance even though the pressure greatly varies.

### Brief Description of the Drawings

Figure 1 is a half-section view of a mechanical seal in accordance with an embodiment of the present invention;
Figure 2 is an enlarged section view of a sealing end portion;
Figure 3 is a half-section view of a mechanical seal in accordance with another embodiment of the present invention;
Figure 4 is a half-section view of a mechanical seal in accordance with a further embodiment of the present invention;
Figures 5 to 7 are half-section views of conventional mechanical seals; and
Figure 8 is an enlarged section view of a sealing end portion which is commonly used in the conventional mechanical seals shown in Figures 5 to 7.

### Best Mode for Carrying Out the Invention

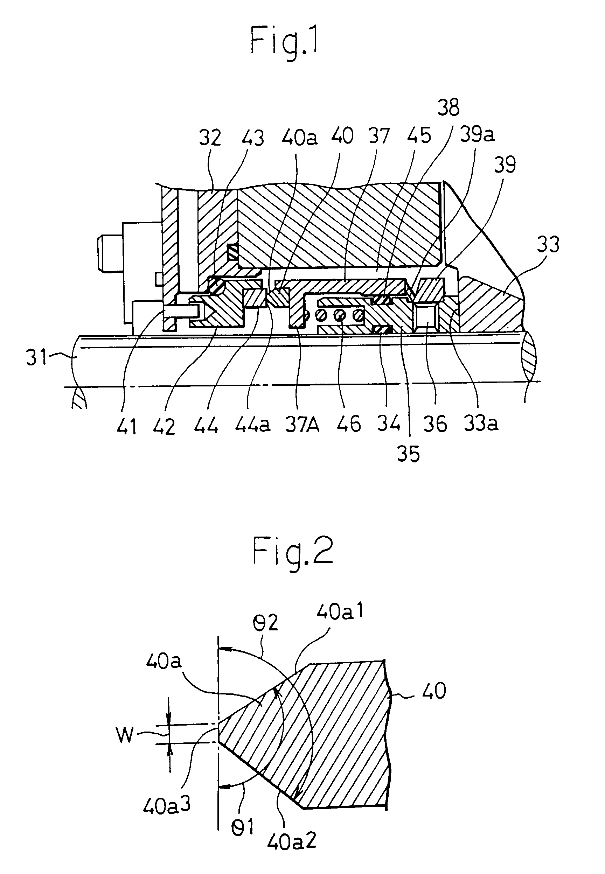

Fig. 1 is a half-section view of a mechanical seal in accordance with an embodiment of the present invention. In Fig. 1, a rotary shaft 31 and a casing 32 of a fluid delivering pump are disposed at the rotary side and the stationary side, respectively. The following mechanical seal is disposed, as a shaft seal, between the outer peripheral surface of the rotary shaft 31 and the inner peripheral surface of the casing 32.

An impeller 33 is fitted on the peripheral surface of that part of the rotary shaft 31 at the pump chamber side. A spring retainer 35 comes in close contact with a shaft-seal-side end surface 33a of the impeller 33 and is secured to the rotary shaft 31 through a screw 36 with the gap between the spring retainer 35 and the outer peripheral surface of the rotary shaft 31 sealed through an O-ring 34. A seal ring retainer 37 is fitted on the outer peripheral surface of the spring retainer 35 with the gap between the inner peripheral surface of the seal ring retainer 37 and the outer peripheral surface of the spring retainer 35 sealed through an O-ring 38 serving as a secondary seal packing. A seal ring 39 is interposed between the end surface of the seal ring retainer 37 at the impeller 33 side and the spring retainer 35. The seal ring 39 has a V-shape sealing portion 39a which is stretchable in the axial direction. The seal ring 39 covers and protects the O-ring 38. The seal ring retainer 37 is provided at the other end thereof with a rotary seal ring 40 adapted to be rotated integrally with the rotary shaft 31.

A retainer 42 is attached to the inner peripheral surface of the casing 32 through a knock pin 41. The gap between the retainer 42 and the inner peripheral surface of the casing 32 is sealed by an O-ring 43. Secured to the end of the retainer 42 is a stationary seal ring 44 having a flat sealing end surface 44a on which slides a blade-like sealing end portion 40a formed at the rotary seal ring 40.

Inside of a fluid space 45 to be sealed by the seal ring retainer 37, the seal ring 39 and the O-ring 38, a mono-coil spring 46 is disposed between an inwardly projecting ring-like portion 37A of the seal ring retainer 37 and the spring retainer 35 which is axially opposite thereto. Accordingly, the rotary seal ring 40 is biased and moved toward the stationary seal ring 44, so that the sealing end portion 40a is resiliently pressed to the flat sealing end surface 44a of the stationary seal ring 44.

As clearly shown in Fig. 2, the sealing end portion 40a of the rotary seal ring 40 is symmetrical in configuration at the inner peripheral surface 40a2 and the outer peripheral surface 40al thereof with respect to the edge surface 40a3 thereof, such that the outer peripheral surface 40al and the inner peripheral surface 40a2 of the sealing end portion 40a are respectively inclined at angles θ1 and θ2 (θ1 = θ2) with respect to the edge surface 40a3 having a width W in the range from 0.1 mm to 0.3 mm, the angle θ1 (=θ2) being not less than 90° and less than 180°.

The materials constituting the rotary seal ring 40 and the stationary seal ring 44 are optionally combined as selected from hard metal mainly composed of WC, carbon and ceramics. Examples of the ceramics include carbide-type ceramics such as Sic, TiC, B₄C and the like; oxide-type ceramics such as Al₂O₃, Cr₂O₃, TiO₂, ZrO₂ and the like; nitride-type ceramics such as Si₃N₄, BN, TiN, NbN and the like; and boride-type ceramics such as TiB₂, ZnB₂ and the like.

The balance ratio determined by the ratio of the contact area of the seal rings 40, 44 to the pressure receiving area of the flat sealing end surface 44a of the stationary seal ring 44, is substantially set to zero. Accordingly, through the surface pressure by the mono-coil spring 46, the sealing end portion 40a and the sealing end surface 44a slide on and come in contact with each other under a substantially constant pressure inspite of variations of the pressure of a liquid to be sealed. This produces a stable sealing effect.

According to the mechanical seal having the arrangement above-mentioned, the sealing end portion 40a of the rotary seal ring 40 is formed such that the inner peripheral surface 40a2 and the outer peripheral surface 40a1 are symmetrical with respect to the edge surface 40a3. Thus, the inner and outer peripheral surfaces can be readily machined with high precision by common machining means, thus reducing the production cost. Further, since the angles θ1 and θ2 are set to the same angle not less than 90° and less than 180°, the blade-like sealing end portion 40a has no corner part presenting an angle less than 90°. This minimizes the occurrence of breakage of the sealing end portion 40a at the time of production and/or operation, thus assuring a predeterming sealing performance in a stable manner for a long period of time.

Further, since the spring 46 is externally fit and the V-shape seal ring 39 covers and protects the O-ring 38 serving as a secondary seal, there is no likelihood that the spring 46 and the O-ring 38 get clogged with dust, dirt, a solidified body and the like. This assures a smooth operation and further improves the sealing performance.

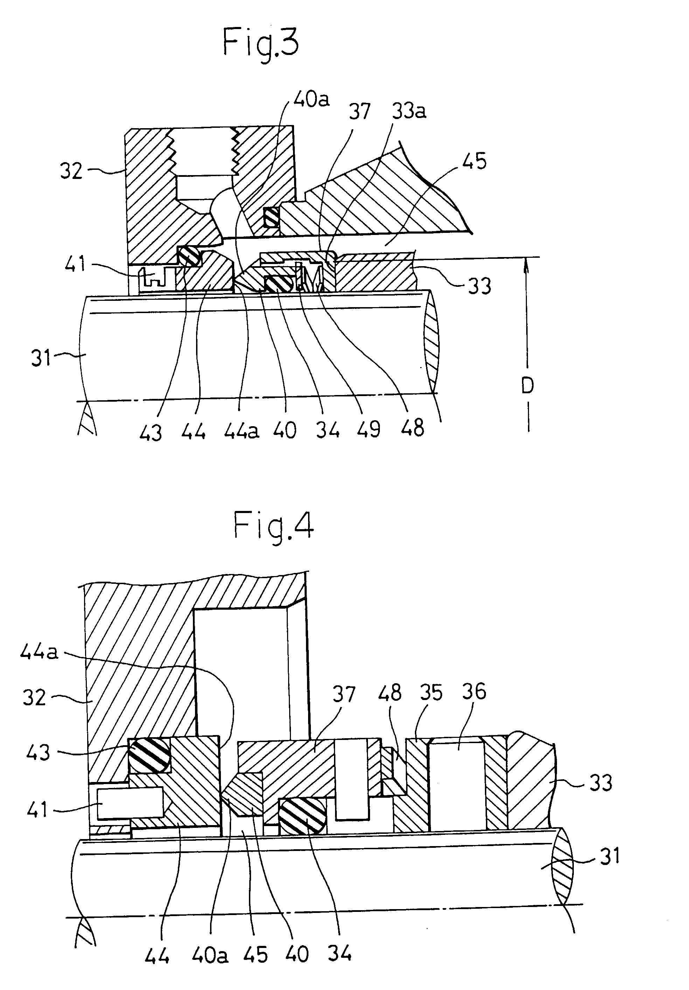

Fig. 3 is a half-section view of the mechanical seal in accordance with another embodiment of the present invention. In the embodiment in Fig. 3, like parts are designated by like reference numerals used in Fig. 1, and are not discussed here in detail.

In Fig. 3, a flat leaf spring 48 is interposed between the seal ring retainer 37 secured to the impeller 33 and a spring bearing ring 49. The spring bearing ring 49 is disposed at the base end of the rotary seal ring 40 held by the seal ring retainer 37 with the gap between the rotary seal ring 40 and the outer peripheral surface of the rotary shaft 31 sealed through the O-ring 34. Accordingly, the rotary seal ring 40 is biased and moved toward the stationary seal ring 44 secured to the inner peripheral surface of the casing 32, so that the sealing end portion 40a is resiliently pressed to the flat sealing end surface 44a. In this embodiment, too, the sealing end portion 40a has the same configuration as that shown in Fig. 2.

According to the mechanical seal having the arrangement above-mentioned, since the sealing end portion 40a has the configuration as shown in Fig. 2, the sealing end portion 40a can be readily machined and prevented from being broken, thus assuring a predetermined sealing performance in a stable manner for a long period of time. In addition, the mechanical seal in Fig. 3 is so arranged as to not only securely prevent the leaf spring 48 from getting clogged with dust, dirt or the like, but also to shorten the seal part with the structure simplified. Further, the balance diameter D can be minimized with respect to the diameter of the edge surface. This imparts a strong resilient pressure to the sealing surface, thus further improving the sealing performance.

Fig. 4 is a half-section view of the mechanical seal in accordance with a further embodiment of the present invention. In the embodiment in Fig. 4, like parts are designated by like reference numerals used in Figs. 1 and 3, and are not here discussed in detail.

Outside of the fluid space 45, the flat leaf spring 48 is interposed between the spring retainer 35 secured to the rotary shaft 31 through the screw 36 and the seal ring retainer 37 axially slidably fitted on the rotary shaft 31 with the gap between the seal ring retainer 37 and the rotary shaft 31 sealed through the O-ring 34. Accordingly, the rotary seal ring 40 is biased and moved toward the stationary seal ring 44, so that the sealing end portion 40a is resiliently pressed to the flat sealing end surface 44a. In this embodiment, too, the sealing end portion 40a has the same configuration as that shown in Fig. 2.

The mechanical seal having the arrangement above-mentioned produces effects similar to those produced by the embodiment shown in Fig. 3, such as easy machinability of the sealing end portion 40a, the high sealing properties without any breakage thereof, the shortened sealing part and the simplified structure. In addition, the mechanical seal in Fig. 4 further improves the sealing performance because of an increase in the spring surface pressure.

### Industrial Applicability

The mechanical seal of the present invention is improved in the configuration of a sealing end portion formed at either one of rotary and stationary seal rings which slide on and come in contact with each other for sealing a fluid. Accordingly, the machining of the sealing end portion is facilitated and a decrease in the sealing performance due to breakage of the sealing end portion is restrained. Further, the operation is smoothly carried out and a strong spring surface pressure can be given at all times. Thus, the mechanical seal of the present invention can be suitably used as a shaft seal in a fluid delivering pump, particularly in a fluid device in a chemical industry that handles a corrosive fluid liable to be solidified containing a great amount of slurry.

## Claims

1. A mechanical seal having a rotary seal ring (40) and a stationary seal ring (44) which slide on and come in contact with each other for sealing a fluid, and spring means (46, 48) for biasing one of said seal rings toward the other seal ring so that said one seal ring is resiliently pressed to said other seal ring, one of said seal rings having a flat sealing end surface (44a) and the other seal ring having a blade-like sealing end portion (40a) with an edge surface (40a3) which slides on and comes in contact with said flat sealing end surface (44a), wherein said blade-like sealing end portion (40a) is arranged such that the angles (θ₁, θ₂) formed by the inner and outer peripheral surfaces (40al, 40a2) thereof with respect to the edge surface (40a3) thereof are set to 90° or more,
**characterized in**
a) that said angles (θ₁, θ₂) are set in the range from 105° to 150° and are equal to each other,
b) that the width (W) of said edge surface (40a3) is set in the range from 0.1 mm to 0.3 mm,
c) that said blade-like seal ring (40) is the rotary seal ring and disposed on a rotary seal member (31),
d) that all of the spring means (46, 48) are attached to the rotary seal member (31),
e) that the spring means (46, 48) either directly press the blade-like seal ring (40) against the stationary seal ring (44) or via a retainer (37) to which the blade-like seal ring (40) is attached,
f) that a large-diameter step portion is formed either on the inner peripheral face of the blade-like seal ring (40) opposite the blade-like sealing end portion (40a) or on the inner peripheral face of the retainer (37), and
g) that the blade-like seal ring (40) or the retainer (37) is supported by an O-ring (34) disposed at said step portion.

2. A mechanical seal according to Claim 1, wherein the spring means comprises a mono-coil spring (46) disposed outside of a fluid space (45), and wherein is disposed a packing serving as a secondary seal (39) which is covered with and protected by an axially stretchable V-shape seal (39a) .

3. A mechanical seal according to Claim 1, wherein the spring means comprises a flat leaf spring (48) disposed inside of a fluid space (45).

4. A mechanical seal according to Claim 1, wherein the spring means comprises a flat leaf spring (48) disposed outside of a fluid space (45).

5. A mechanical seal according to Claim 1, wherein the balance ratio determined by the ratio of the contact area of both sealing rings to the pressure receiving area of the flat surface is set substantially to zero.

6. A mechanical seal according to any of Claims 1 to 5, wherein the flat sealing end surface (44a) and sealing end portion (40a) of the seal rings (40, 44) are made of at least one substance selected from the group consisting of hard metal mainly composed of WC, carbon and ceramics of the carbide-, oxide-, nitride- and boride-type.

## Patentansprüche

1. Eine Gleitringdichtung mit einem rotierenden Dichtungsring (40) und einem stationären Dichtungsring (44), die aufeinander gleiten und zur Abdichtung einer Flüssigkeit miteinander in Berührung stehen, und mit Federmitteln (46, 48) zum Vorspannen eines dieser Dichtungsringe gegen den anderen Dichtungsring, so daß der eine Dichtungsring elastisch gegen den anderen Dichtungsring gedrückt wird, wobei einer der Dichtungsringe eine ebene Dichtungsendfläche (44a) und der andere Dichtungsring einen klingenartigen Dichtungsendteil (40a) mit einer Kantenfläche (40a3) hat, die auf der ebenen Dichtungsendfläche (44a) gleitet und mit ihr in Berührung steht, wobei der klingenartige Dichtungsendteil (40a) so angeordnet ist, daß die durch ihre inneren und äußeren Randflächen (40al, 40a2) gebildeten Winkel (θ₁, θ₂) in Bezug auf ihre Kantenfläche (40a3) 90° oder mehr betragen,
dadurch gekennzeichnet,
a) daß diese Winkel (θ₁, θ₂) auf den Bereich von 105° bis 150° eingestellt werden und untereinander gleich sind,
b) daß die Breite (W) der Kantenfläche (40a3) im Bereich von 0,1 mm bis 0,3 mm gewählt wird,
c) daß der klingenartige Dichtungsring (40) der rotierende Dichtungsring ist und auf einem rotierenden Dichtungsglied (31) angeordnet ist,
d) daß alle Federmittel (46, 48) an dem rotierenden Dichtungsglied (31) befestigt sind,
e) daß die Federmittel (46, 48) den klingenartigen Dichtungsring (40) entweder direkt oder über einen Halter (37), an dem der klingenartige Dichtungsring (40) befestigt ist, gegen den stationären Dichtungsring (44) drücken,
f) daß ein Stufenteil mit großem Durchmesser entweder an der inneren Randfläche des klingenartigen Dichtungsrings (40) gegenüber dem klingenartigen Dichtungsendteil (40a) oder an der inneren Randfläche des Halters (37) ausgebildet ist, und
g) daß der klingenartige Dichtungsring (40) oder der Halter (37) von einem an dem Stufenteil angeordneten O-Ring (34) gehaltert wird.

2. Eine Gleitringdichtung gemäß Anspruch 1, wobei das Federmittel eine Einschraubenfeder (46) beinhaltet, die außerhalb eines Flüssigkeitsraums (45) angeordnet ist, und in dem eine als sekundäre Dichtung (39) dienende Stopfbüchsendichtung angeordnet ist, die von einer axial dehnbaren, V-förmigen Dichtung (39) ummantelt und geschützt wird.

3. Eine Gleitringdichtung gemäß Anspruch 1, wobei das Federmittel eine innerhalb des Flüssigkeitsraumes (45) angeordnete flache Blattfeder (48) beinhaltet.

4. Eine Gleitringdichtung gemäß Anspruch 1, wobei das Federmittel eine außerhalb des Flüssigkeitsraumes (45) angeordnete flache Blattfeder (48) beinhaltet.

5. Eine Gleitringdichtung gemäß Anspruch 1, wobei das durch das Verhältnis zwischen dem Berührungsbereich der beiden Dichtungsringe und dem druckaufnehmenden Bereich der ebenen Oberfläche bestimmte Gleichgewichtsverhältnis im wesentlichen bei Null liegt.

6. Eine Gleitringdichtung gemäß den Ansprüchen 1 bis 5, wobei die flache Dichtungsendfläche (44a) und der Dichtungsendteil (40a) der Dichtungsringe (40,44) aus wenigstens einer Substanz, ausgewählt aus der Hartmetallgruppe, hauptsächlich zusammengesetzt aus WC, Kohlenstoff und Keramik des Karbid-, Oxid-, Nitrid- oder Borid-Typs, gefertigt ist.

## Revendications

1. Garniture d'étanchéité mécanique comprenant un joint annulaire tournant (40) et un joint annulaire fixe (44) qui glissent l'un sur l'autre et qui viennent en contact entre eux pour enfermer un fluide d'une manière étanche, et des moyens élastiques (46, 48) pour rappeler l'un desdits joints annulaires vers l'autre joint annulaire, de sorte que ledit premier joint annulaire est serré élastiquement sur ledit autre joint annulaire, l'un desdits joints annulaires présentant une surface terminale d'étanchéité plate (44a) et l'autre joint annulaire présentant une partie terminale d'étanchéité en forme de lame (40a) pourvue d'une surface de bord (40a3) qui glisse sur ladite surface terminale d'étanchéité plate (44a) et qui vient en contact avec elle, dans laquelle ladite partie terminale d'étanchéité en forme de lame (40a) est disposée d'une manière telle que les angles (θ1, θ2) formés par les surfaces intérieure et extérieure (40a1, 40a2) de son pourtour avec la surface (40a3) de son bord soient choisis égaux à 90° ou plus,
caractérisée par le fait :
a) que lesdits angles (θ1, θ2) sont choisis dans la gamme comprise entre 105° et 150°, et qu'ils sont égaux entre eux,
b) que la largeur (W) de ladite surface de bord (40a3) est choisie dans la gamme comprise entre 0,1 mm et 0,3 mm,
c) que ledit joint annulaire en forme de lame (40) est le joint annulaire tournant, et qu'il est disposé sur un organe d'étanchéité tournant (31),
d) que tous les moyens élastiques (46, 48) sont fixés à l'organe d'étanchéité tournant (31),
e) que les moyens élastiques (46, 48) serrent le joint annulaire en forme de lame (40) contre le joint annulaire fixe (44), soit directement, soit par l'intermédiaire d'un organe de retenue (37) auquel le joint annulaire en forme de lame (40) est fixé,
f) qu'une partie à épaulement de plus grand diamètre est formée, soit sur la face du pourtour intérieur du joint annulaire en forme de lame (40) qui est opposée à la partie terminale d'étanchéité en forme de lame (40a), soit sur la face du pourtour intérieur de l'organe de retenue (37), et :
g) que le joint annulaire en forme de lame (40) ou l'organe de retenue (37) est porté par un joint torique (34) qui est disposé sur ladite partie à épaulement.

2. Garniture d'étanchéité mécanique selon la revendication 1, dans laquelle les moyens élastiques comprennent un ressort à une seule spire (46) qui est disposé à l'extérieur d'un espace (45) rempli de fluide, et dans laquelle est disposée une garniture qui sert de joint secondaire (39) et qui est couverte et protégée par un joint en forme de V (39a) pouvant être étendu axialement.

3. Garniture d'étanchéité mécanique selon la revendication 1, dans laquelle les moyens élastiques comprennent une lame de ressort plate (48) qui est disposée à l'intérieur d'un espace (45) rempli de fluide.

4. Garniture d'étanchéité mécanique selon la revendication 1, dans laquelle les moyens élastiques comprennent une lame de ressort plate (48) qui est disposée à l'extérieur d'un espace (45) rempli de fluide.

5. Garniture d'étanchéité mécanique selon la revendication 1, dans laquelle le rapport à l'équilibre déterminé par le rapport entre l'aire de contact des deux joints annulaires et l'aire de la surface plate qui reçoit la pression est choisi sensiblement égal à zéro.

6. Garniture d'étanchéité mécanique selon l'une quelconque des revendications 1 à 5, dans laquelle la surface terminale d'étanchéité plate (44a) et la partie terminale d'étanchéité (40a) des joints annulaires (40, 44) sont constituées par au moins une substance choisie parmi le groupe comprenant les métaux durs principalement composés de carbure de tungstène, de carbone et de céramiques du type des carbures, des oxydes, des nitrures et des borures.
